# EUROPÄISCHE PATENTSCHRIFT

(11) **EP 0 559 023 B1**
(45) Veröffentlichungstag und Bekanntmachung des Hinweises auf die Patenterteilung: **18.09.1996**
(21) Anmeldenummer: 93102649.6
(22) Anmeldetag: 19.02.1993
(51) Int. Cl.: A01D 78/12

(54) **Kreiselrechen für eine Heuwerbungsmaschine**
Rotary rake for haymaking machine
Râteau rotatif pour machine de fenaison

(30) Priorität: 02.03.1992 DE 4206503
(43) Veröffentlichungstag der Anmeldung: 08.09.1993
(73) Patentinhaber: Maschinenfabriken Bernard Krone GmbH, D-48480 Spelle (DE)
(72) Erfinder: Krone, Bernard, W-4441 Spelle (DE); Kreienbaum, Hubert, W-4424 Stadtlohn (DE); Horstmann, Josef, Dipl.-Ing., W-4530 Ibbenbüren (DE)

(56) Entgegenhaltungen:
- EP-A- 0 073 900
- EP-A- 0 130 617
- CH-A- 486 825
- FR-A- 2 312 189
- FR-A- 2 442 003
- GB-A- 2 036 525
- GB-A- 2 092 421

## Beschreibung

Die Erfindung betrifft einen Kreiselrechen für eine Heuwerbungsmaschine gemäß dem Oberbegriff des Anspruchs 1.

Es sind Kreiselrechen bekannt, deren Kreiselräder, an denen Zinkenarme gelagert sind, in ihrer Drehrichtung umkehrbar sind, um verschiedene Arbeitsaufgaben erfüllen zu können. Solche Kreiselrechen weisen Zinkenarme auf, die mit den an ihnen gehalterten Zinken gesteuert um ihre Längsachsen verschwenkbar sind. Diese Steuerung erfolgt während der Drehbewegung über Kurvenbahnen.

Kreiselrechen dieser Art sind beispielsweise in der DE 35 29 771 C2 beschrieben. Hier sind zwei Kreiselrechen einer Heuwerbungsmaschine mit radial von den Drehachsen der Kreiselrechen abweisenden Zinkenarmen in entgegengesetztem Drehsinn angetrieben. Die Drehrichtung beider Kreiselrechen ist gleichzeitig umkehrbar. Um bei beiden Drehrichtungen eine gleiche Arbeitsqualität zu erreichen, sind die Zinkenarme zwischen beiden Kreiselrechen austauschbar. Es ist also ein Satz Zinkenarme für Rechtsdrehung und ein Satz für Linksdrehung vorhanden, die entsprechend der Drehrichtung der Kreiselrechen umtauschbar Verwendung finden. Dieser Aufwand wird betrieben, um unabhängig von der Drehrichtung gezogene Zinken einzusetzen, da bekannt ist, daß mit vertikalen Zinken, die in beiden Drehrichtungen betrieben werden, keine gute Arbeitsqualität erreichbar ist und häufig Zinkenbrüche auftreten. Günstig gestaltete Zinken weisen Federspeicher auf, wobei diese nur in einer Richtung optimal einsetzbar sind. Bei Heuwerbungsmaschinen, die nur einen Kreiselrechen aufweisen bzw. bei denen nur die Drehrichtung eines Kreiselrechens verändert werden soll, kann die in der DE 35 29 771 C2 aufgezeigte Lösung nicht zur Anwendung kommen. Ein weiterer Nachteil dieser Lösung besteht in der radialen Ausrichtung der Zinkenspitzen zum Kreiselrad des Kreiselrechens, wodurch insbesondere bei hohen Fahrgeschwindigkeiten nur ein Teil der erreichbaren Fläche auf dem Erdboden von den Zinken überstrichen wird.

Letztere Nachteile werden durch eine tangentiale Anordnung von Zinkenarmen an einem Kreiselrad einer Heuwerbungsmaschine, wie sie beispielsweise in der GB 2 092 421 A beschrieben ist, beseitigt. Derartige Heuwerbungsmaschinen sind als Universalmaschinen zum Schwaden und zum Zetten ausgebildet. Zinkentragarme können hierbei aus einer ungesteuerten, radialen Neutrallage in eine gesteuerte, tangentiale Rechts- oder Linkslage um etwa 180 Grad seitwärts verschwenkt werden. Die Verstellfunktion bedingt zwei gleichwirkende Steuerrollen an jedem Steuerarm und einen Verschwenk- und Verriegelungsmechanismus, der es erlaubt, daß eine jeweils in einer Steuerkurve befindliche erste Steuerrolle aus der Steuerkurve über den Zinkenarm herausgeschwenkt werden kann, so daß anschließend nach einem Verschwenkvorgang des Steuerarmes in horizontaler Ebene eine zweite Steuerrolle wieder in die Kurvenbahn einschwenk- bzw. einführbar ist. Ein derartiger Verschwenk- und Verriegelungsmechanismus benötigt mehrere Schwenkachsen und eine Rasteinrichtung, die auf Grund von Toleranzen die Laufrollenführung und damit ihre Laufruhe beeinträchtigt. Ferner muß der Verschwenk- und Verriegelungsmechanismus konstruktiv sehr stabil ausgeführt sein, da die gesamte Antriebskraft für einen Zinkenarm über diesen übertragen wird. Letzteres erhöht wiederum die Herstellungskosten. Ein weiterer wesentlicher Nachteil besteht bei derartigen Heuwerbungsmaschinen darin, daß die Zinken nicht mit kostengünstigen aufgerollten und nur in Rollrichtung ihrer Windungen belastbaren Federspeichern ausgebildet sein können. Solche Zinken würden bei einem Drehrichtungswechsel eines Kreiselrades im Rücken, d.h. entgegen ihrer Rollrichtung belastet und dadurch aufgebogen, was zur Funktionsunfähigkeit bis hin zu ihrer Zerstörung führen würde. Elastisch in einem Befestigungs- und Federungskörper aus Gummi eingebettete Zinken haben sich in der Praxis nicht bewährt und sind auch sehr teuer.

Aus der EP 0 130 617 A1 ist nun eine Heuwerbungsmaschine, insbesondere eine Schwadmaschine, bekannt, die mindestens einen Kreiselrechen besitzt, an dessen Kreiselrad mehrere speichenartig abstehende und tangential zum Kreiselrad ausgerichtete Zinkenarme in Traglagern befestigt sind. Derartige Kreiselrechen für Heuwerbungsmaschinen sind konstruktiv so ausgeführt, daß sie bei der Fabrikation im Werk materialsparend und montagefreundlich aufgebaut sind. Zu diesem Zweck sind die einzelnen Traglager besonders geformt und jedes mit Befestigungsösen ausgebildete Traglager bildet zusammen mit einem Zinkenarm, einem Steuerhebel, einer Steuerrolle und Lagerteilen eine kompakte feste Baueinheit, die je nach Bedarf bei der Montage im Werk auf Grund ihrer Wendbarkeit in links- oder rechtsdrehenden Kreiselrechen montiert und entsprechend mit dem Kreiselrad über Befestigungselemente wie Schrauben oder Bolzen mit Gewindeenden befestigt werden können. Es liegt hier zwar eine lösbare Verbindung zwischen den vorstehenden Baueinheiten untereinander und zwischen diesen und Teilen eines Kreiselrades vor, die, wie bei allen herkömmlichen Baueinheiten, zu Montagezwecken beispielsweise zur Serienfertigung oder bei der Bandmontage immer vorhanden ist. Ferner müssen bei der Montage der Baueinheiten an links- oder rechtsdrehenden Kreiselrechen die Zinkenarme mit entweder beidseitig belastbaren, geraden Zinken oder jeweils mit Zinken in einer Ausführungsform für links- oder rechtsdrehende Kreiselrechen ausgebildet sein. Zinkenarme lassen sich aus den Traglagern der Baueinheit mit einfachen Hilfsmitteln nicht entfernen, so daß im praktischen Einsatz bei der Heuwerbung solche Kreiselrechen nicht für eine Drehrichtungsumkehr geeignet sind.

Eine weitere Heuwerbungsmaschine mit mindestens einem Kreiselrechen zum Schwaden von Erntegut ist aus der DE-AS 17 57 276 bekannt. Der Kreiselrechen dieser Heuwerbungsmaschine ist mit einem um eine aufrechte Achse drehbaren Kreiselrad ausgerüstet, dessen Antrieb über ein Zwischengetriebe, beispielsweise einem Riementrieb, von der Zapfwelle eines Zugfahrzeugs aus erfolgt. Im Betrieb stützt sich das Kreiselrad über Stützräder zum Erdboden hin ab und mit Federspeichern ausgebildete Zinken sind an etwa horizontal und annähernd tangential zum Kreiselrad ausgerichteten Zinkenarmen gehaltert. Diese werden wiederum in ebenfalls tangential in Längsausrichtung zum Kreiselrad ausgerichteten Traglagern aufgenommen, wobei die Zinkenarme zur Erzeugung von Arbeitsbewegungen um Längsachsen der Traglager an einer begrenzt um die aufrechte Achse verschwenkbaren Kurvenbahn geführt wird. Dieser Kreiselrechen einer Heuwerbungsmaschine läßt sich auf Grund der tangentialen Anordnung seiner Zinkenarme und den an diesen gehalterten mit Federspeichern ausgebildeten Zinkengruppen sowie seiner begrenzt verstellbaren Kurvenbahn rationell bei der Heuwerbung einsetzen. Soll dieser Kreiselrechen jedoch laut der DE-AS 17 57 276 in einer Heuwerbungsmaschine mit einem weiteren Kreiselrechen gegenläufig rotierend angetrieben werden, so muß werksseitig diese Heuwerbungsmaschine mit unterschiedlichen Kreiselrechen für Links- und Rechtslauf bestückt werden. Im praktischen Einsatz kann hier nicht wahlweise die Drehrichtung eines Kreiselrades verändert werden.

Es ist Aufgabe der Erfindung, einen Kreiselrechen zu schaffen, der in beiden möglichen Drehrichtungen bei gleicher Arbeitsqualität zu betreiben ist, der ferner tangential zum Kreiselrad ausgerichtete Zinkenarme aufweist, an denen mit Federspeichern ausgebildete Zinken gehaltert sind, wobei ausgegangen wird von dem Vorhandensein nur eines Satzes mit Zinkengruppen besetzter Zinkenarme und die Umstellung der Zinkengruppen und damit der Wechsel der Ablagerichtung des Kreiselrechens mit besonders einfachen Mitteln und mit sehr geringem Aufwand ausführbar ist und Fehlbedienungen vermieden werden. Die Steuerung der Bewegung der Zinken soll so erfolgen, daß sie bei beiden Drehrichtungen des Kreiselrechens spiegelbildlich zu einer fahrtrichtungsparallelen Vertikalebene durch die Drehachse des Kreiselrechens erfolgen kann.

Zur Lösung dieser Aufgabe zeichnet sich der Kreiselrechen der obengenannten Art durch die im kennzeichnenden Teil des Anspruchs 1 angegebenen Merkmale aus. Hinsichtlich weiterer Ausgestaltungen wird auf die Ansprüche 2 bis 13 verwiesen.

Der in seiner Drehrichtung umkehrbare Kreiselrechen weist vorteilhafte Merkmale auf, durch die erreicht wird, daß in absolut gleicher Qualität gearbeitet wird, unabhängig in welchem Drehsinn er rotiert. Dieser Kreiselrechen weist mit Federspeichern ausgebildete nachlaufend gezogene Zinken auf, die an etwa horizontal und annähernd tangential zum Kreiselrad ausgerichtete Kreiselarme gehaltert sind, die wiederum in ebenfalls tangential in Längsausrichtung zum Kreiselrad ausgerichteten Traglagern lösbar aufgenommen werden. Das Kreiselrad mit den Zinkenarmen rotiert im Betrieb um eine etwa vertikale Achse, wobei die Zinkenarme mit den Zinken gleichzeitig gesteuerte Bewegungen um Längsachsen der Zinkenarme ausführen. Diese Bewegung wird über eine Kurvenbahn gesteuert, und es wird erreicht, daß sich die Zinken nur innerhalb eines bestimmten Abschnittes ihrer Umdrehung in einer Rechposition befinden. Alle dazu erforderlichen Steuerungsteile sind symmetrisch zu Radialen angeordnet, welche rechtwinklig zu den Längsachsen der Traglager bzw. der Zinkenarme ausgerichtet sind. Dadurch erfolgt in beiden Drehrichtungen eine gleiche Steuerung der Zinkenbewegung. Zur Feineinstellung der Zeit, in der sich die Zinken in ihrer Rechposition befinden, ist die ebenfalls symmetrische Kurvenbahn begrenzt um die Achse verschwenkbar, um die das Kreiselrad rotiert. Erfolgt eine Umkehr der Drehrichtung des Kreiselrechens, werden die Zinkenarme aus den Traglagern am Kreiselrad gelöst und spiegelbildlich zu der genannten Radialen wieder montiert. Dazu sind die Zinkenarme beispielsweise zweiteilig ausgelegt. Sie bestehen aus einem Zwischenstück, das am Kreiselrad in Traglagern zu haltern ist, und aus einem Zinkenhalteteil, das lösbar am Zwischenstück so anzustecken ist, daß die Zinken immer der Längsachse des Zinkenarms nachlaufen. Der Umbauaufwand ist gering und der Kreiselrechen ist damit vollwertig in beiden Drehrichtungen einsetzbar.

Um eine möglichst große Arbeitsfläche mit den Zinkenspitzen überstreichen zu können, ist deren Lage zur Achse des Kreiselrechens bedeutend. Optimal ist, wenn nicht alle Zinkenspitzen der Zinken eines Zinkenarmes auf einer Radialen liegen sondern eine durch diese Zinkenspitzen gelegte Gerade einen Winkel von 10 Grad bis 30 Grad, vorzugsweise 20 Grad, mit einer Geraden bildet, die durch die Achse des Kreiselrades und die äußerste Zinkenspitze verläuft.

Die weitere Beschreibung der Erfindung erfolgt an Hand von Ausführungsbeispielen. In den dazugehörigen Zeichnungen stellen im einzelnen dar:
- Fig. 1:: Eine Seitenansicht eines erfindungsgemäßen Kreiselrechens, teilweise im Schnitt dargestellt;

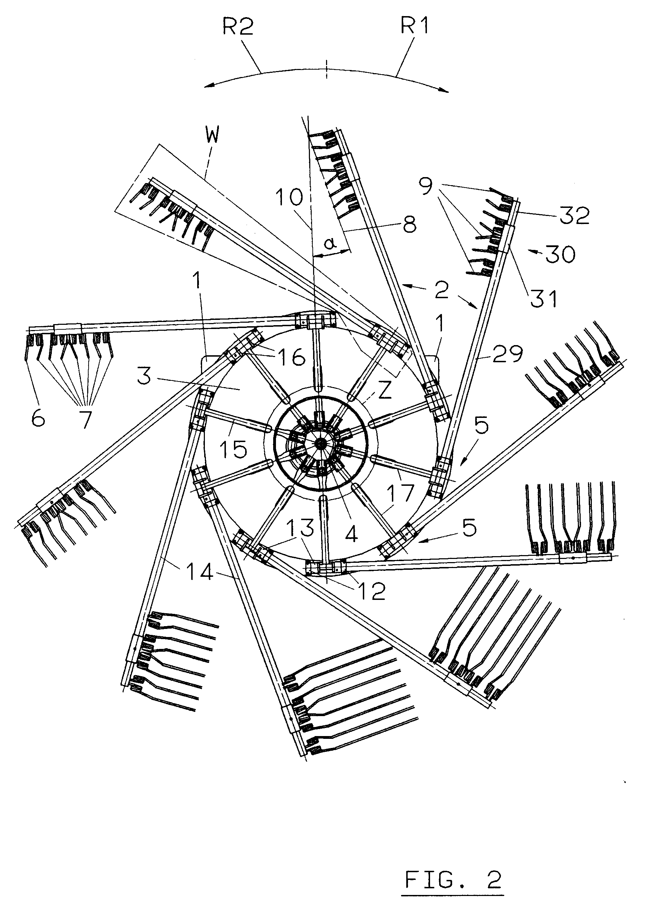

- Fig. 2:: eine Schnittdarstellung nach Linie II - II in Fig. 1;

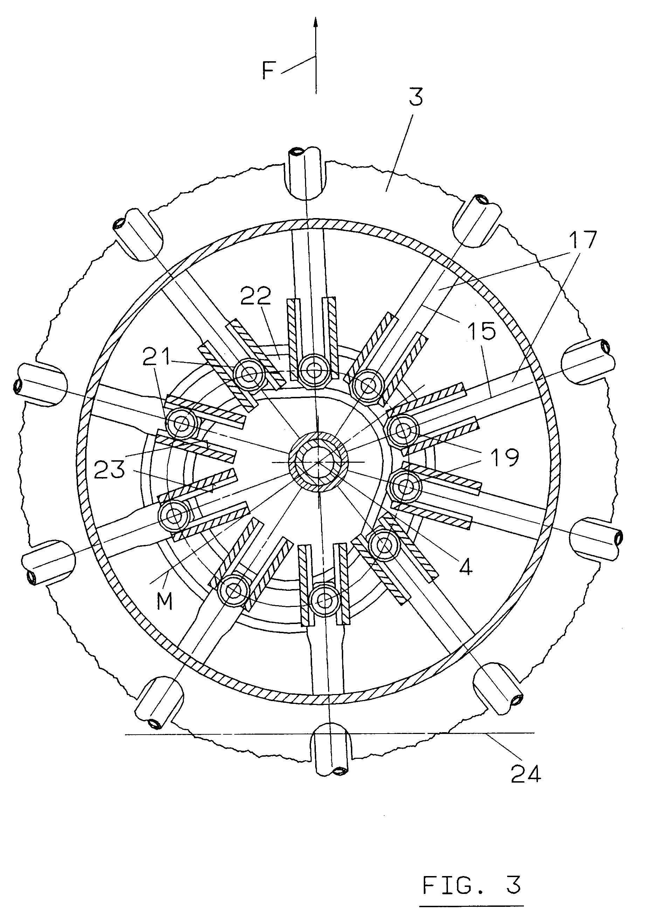

- Fig. 3:: Einzelheit Z aus Fig. 2 in vergrößertem Maßstab;

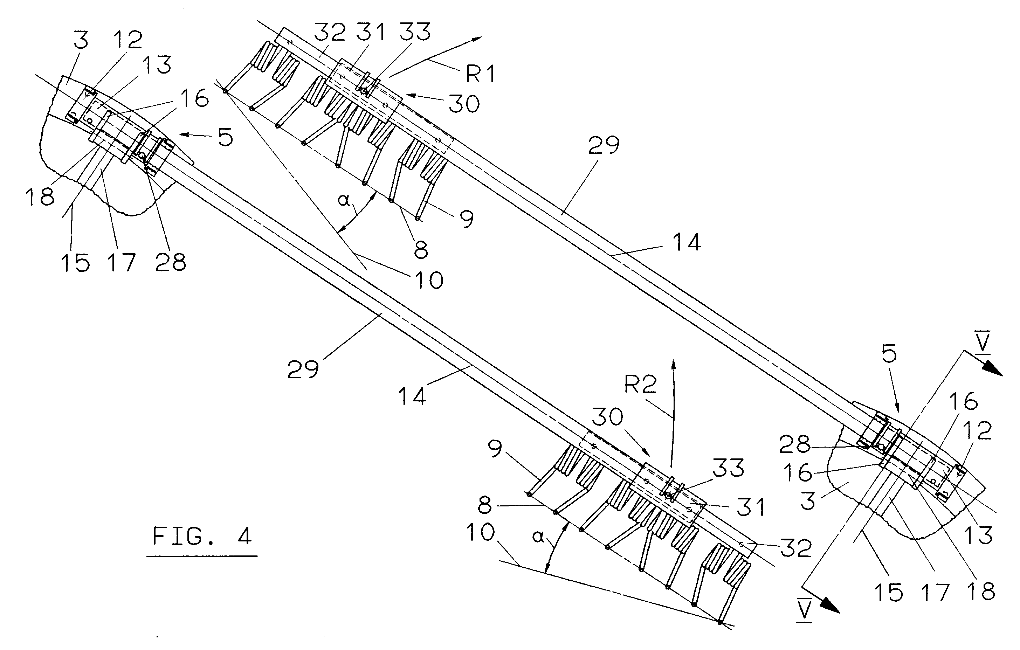

- Fig. 4:: Einzelheit W aus Fig. 2 in vergrößertem Maßstab in beiden möglichen Montagevarianten;

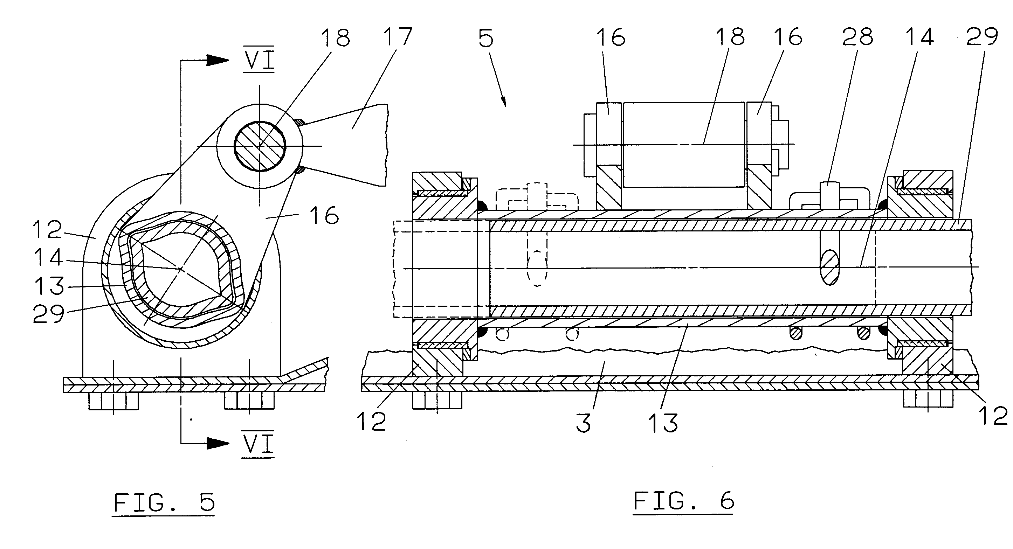

- Fig. 5:: eine Schnittdarstellung nach Linie V - V in Fig. 4;
- Fig. 6:: eine Schnittdarstellung nach Linie VI - VI in Fig. 5.

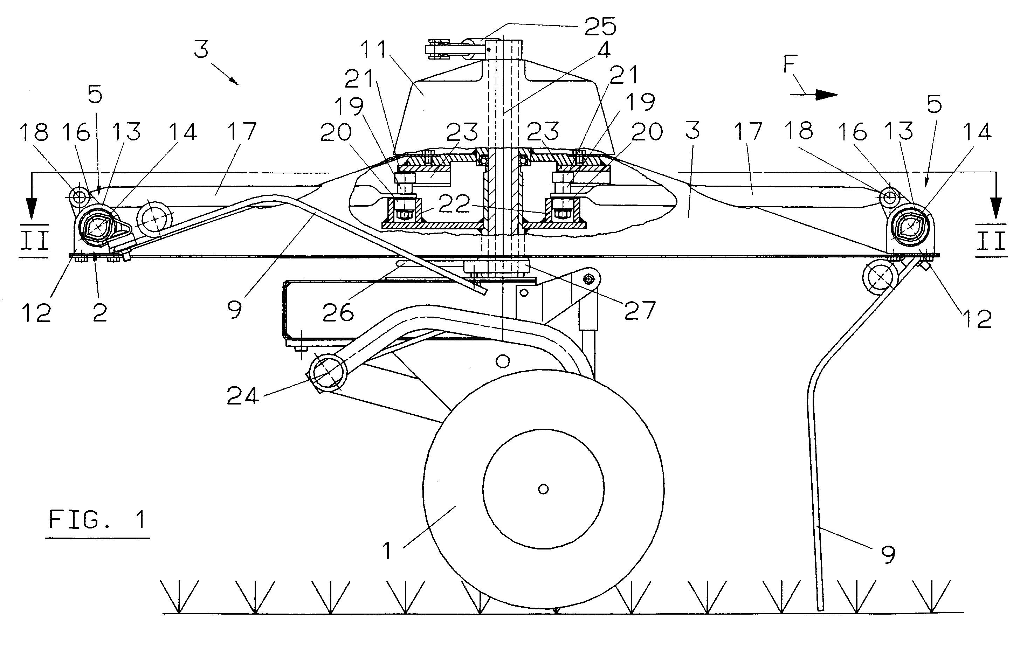

Der in Fig. 1 dargestellte, sich über höhenverstellbare Stützräder 1 zum Erdboden abstützende Kreiselrechen weist Zinkenarme 2 auf, die tangential an einem Kreiselrad 3 in Traglagern 12, 13 gelagert sind und gemeinsam mit diesem im Betrieb um eine etwa vertikale Achse 4 rotieren. Es sind dazu die Traglager 12, 13 als lösbare Verbindungen 5 zwischen den Zinkenarmen 2 und dem Kreiselrad 3 vorgesehen. Der Durchmesser des Kreiselrades 3 und die Länge der Zinkenarme 2 wurden so gewählt, daß eine Zinkenspitzen 6, 7 verbindende Gerade 8 in Rechposition der Zinken 9 mit einer Geraden 10 durch die äußerste Zinkenspitze 6 und die Achse 4 in einer horizontalen Ebene einen Winkel α von 20 Grad einschließt. Je nach Fahrgeschwindigkeit, mit der eine Heuwerbungsmaschine, die mit einem erfindungsgemäßen Kreiselrechen ausgerüstet ist, bewegt wird, und je nach der Umfangsgeschwindigkeit der Zinken 9 um die Achse 4 wird durch die Zinken 9 die größtmögliche Fläche bei einem Winkel α zwischen 10 Grad und 30 Grad überstrichen. Bei einer solchen Zinkenanordnung liegt eine sehr gute Arbeitsqualität vor.
Der Kreiselrechen besteht aus einem Getriebe 11, über das der Antrieb des Kreiselrades 3 von einer Antriebsguelle her erfolgt und an dem auch Rahmenteile zur Abstützung des Kreiselrechens anbaubar sind. In der Antriebsverbindung zwischen der Antriebsquelle, beispielsweise einem landwirtschaftlichen Zugfahrzeug, und dem Getriebe 11 ist ein Zwischengetriebe vorzusehen, an dem durch einen Schaltvorgang die Drehrichtung R1, R2 des Kreiselrades 3 gewechselt werden kann.
Am Umfangsrand des Kreiselrades 3 sind Stehlager 12 aufgeschraubt, wobei jeweils zwei Stehlager 12 ein Schwenkrohr 13 abstützen und diese Einheit das Traglager 12, 13 bilden, in das jeweils ein Zinkenarm 2 einführbar und arretierbar ist. Durch die Art der Gestaltung der lösbaren Verbindungen 5 mit dem Schwenkrohr 13 des Traglagers 12, 13 wird abgesichert, daß die tangential ausgerichteten Zinkenarme 2 innerhalb des Schwenkrohres 13 nicht verschieblich oder verdrehbar sind. Die Schwenkrohre 13 mit den Zinkenarmen 2 sind begrenzt um Längsachsen 14 verschwenkbar. Dazu sind jeweils symmetrisch zu einer gedachten radialen Linie 15 des Kreiselrades 3, welche rechtwinklig zu der Längsachse 14 durch die Achse 4 verläuft (im folgenden nur mit Radiale 15 bezeichnet), Hebel 16 an den Schwenkrohren 13 des Traglagers 12, 13 verschweißt. Die Schwenkrohre 13 selbst sowie die sie abstützenden Stehlager 12 sind ebenfalls symmetrisch zu den Radialen 15 gestaltet bzw. angeordnet. Die mit den Zinken 9 besetzten Enden der Zinkenarme 2 weisen entgegen der Drehrichtung R1, R2 des Kreiselrades 3 tangential von diesem weg. An den Hebeln 16 sind Steuerstangen 17 einseitig so gelagert, daß sie um Achsen 18 verschwenkbar sind, die parallel zu den Längsachsen 14 der Traglager 12, 13 und der Zinkenarme 2 ausgerichtet sind. Anderenendes sind die Steuerstangen 17 mit Zapfen 19 verbunden. Unterhalb der Steuerstangen 17 befindet sich je eine Rolle 20 auf dem Zapfen 19 und oberhalb eine Rolle 21. Die Rolle 20 läuft in einer Kurvenbahn 22, welche durch ein nach oben offenes in verschiedenem Abstand um die Achse 4 angeordnetes U-Profil gebildet wird und keine Drehbewegung um die Achse 4 ausführt. Die Rollen 21 bewegen sich in jeweils einer Führungsbahn 23, wobei die Führungsbahnen 23 mit dem Kreiselrad 3 in Verbindung stehen und gemeinsam mit diesem um die Achse 4 rotieren. Die Führungsbahnen 23 sind symmetrisch zu den Radialen 15 gestaltet und angeordnet, wodurch erreicht wird, daß auch die Steuerstangen 17 und die Zapfen 19 mit den Rollen 20, 21 ständig symmetrisch zu den Radialen 15 ausgerichtet sind. Dadurch, daß die Rollen 20 in der Kurvenbahn 22 geführt werden, ist der Abstand der Zapfen 19 von der Achse 4 veränderlich, und die Rollen werden in den Führungsbahnen 23 hin- und herbewegt. Auch die Steuerstangen 17 vollziehen diese Bewegungen mit und bewirken ein begrenztes Verdrehen der Schwenkrohre 13 der Traglager 12, 13 mit den Zinkenarmen 2 um die Längsachsen 14, wobei die Zinken 9 abwechselnd aus ihrer Rechposition heraus in eine ausgehobene Position oder umgekehrt bewegt werden. Die Kurvenbahn 22 ist so gestaltet, daß sich ständig die Zinken 9 von vier Zinkenarmen 2 in einer Rechposition befinden. Des weiteren ist die Kurvenbahn 22 symmetrisch zu einer horizontalen, die Achse 4 schneidenden Geraden M gestaltet, so daß die Bewegung der Zinken 9 in die Rechposition und aus der Rechposition in umgekehrt gleicher Weise erfolgt.
Die Ausrichtung der Kurvenbahn 22 zur Fahrtrichtung F wird in Abhängigkeit von der Stellung einer Querachse 24 der Halterung der Stützräder 1, die über eine Kolben-Zylinderanordnung 25 immer quer zur Fahrtrichtung F ausgerichtet wird, gesteuert. Zusätzlich ist diese Ausrichtung über einen Hebel 26 und ein Feststellstück 27 feingradig veränderbar und festlegbar. Über den Hebel 26 ist festlegbar, wann die Zinken 9 ihre Rechposition während ihrer Drehbewegung um die Achse 4 einnehmen, indem die Kurvenbahn 22, nach Lösen des Feststellstücks 27 von der Halterung der Stützräder 1, gemeinsam mit dem Hebel 26 begrenzt um die Achse 4 verschwenkbar ist. Um bei einer Umkehrung der Drehrichtung R1, R2 des Kreiselrades 3 gleiche Arbeitsverhältnisse und eine gleiche Arbeitsqualität wie bei der ursprünglichen Drehrichtung R1, R2 zu erreichen, sind die Verbindungen 5 zwischen den Zinkenarmen 2 und den Schwenkrohren 13 der Traglager 12, 13 am Kreiselrad 3 lösbar und die Zinkenarme 2 zweiteilig ausgeführt. Nach Umschalten am Zwischengetriebe und Lösen von Verbindungsstiften 28, welche die Zinkenarme 2 in den Schwenkrohren 13 sichern, sind die Zinkenarme 2 aus den Schwenkrohren 13 herauszuziehen und von der anderen Seite wieder in die Schwenkrohre 13 einzustecken und zu sichern. Damit sind die Längsachsen 14 der Zinkenarme 2 wieder tangential ausgerichtet und, die Zinkenarme 2 weisen entgegen der neu vorgewählten Drehrichtung R1, R2 vom Kreiselrad 3 weg.
Die Zinkenarme 2 bestehen aus Zwischenstücken 29, die im Schwenkrohr 13 der Traglager 12, 13 wie beschrieben gehaltert werden und aus Zinkenhalteteilen 30, die wiederum lösbar mit den Zwischenstücken 29 verbunden sind. Die Zinkenhalteteile 30 bestehen aus einem Profilrohr 31, an dem eine Schiene 32 gehaltert, beispielsweise verschweißt ist, woran sich die Zinken 9 abstützen.

Auch das Zwischenstück 29 ist vorzugsweise aus Profilrohr gefertigt, wodurch erreichbar ist, daß kein Verdrehen des Zwischenstücks 29 im Schwenkrohr 13 und des Profilrohrs 31 auf dem Zwischenstück 29 um die Längsachse 14 erfolgen kann. Das im Ausführungsbeispiel verwendete Rohr für die Schwenkrohre 13 der Traglager 12, 13, die Zwischenstücke 29 und die Profilrohre 31 weist ein Zitronenprofil (Gelenkwellenprofil) auf, dessen Verwendung sich besonders gut eignet. Das Profilrohr 31 wird auf dem Zwischenstück 29 durch einen weiteren Verbindungsstift 33 (im Beispiel ein Klappsplint) gesichert und bei Drehrichtungswechsel des Kreiselrades 3 immer so auf das Zwischenstück 29 aufgesteckt, daß die Zinkenspitzen 6, 7 der Längsachse 14 nacheilen, die Zinken 9 also vom jeweiligen Zinkenarm 2 gezogen werden. Die Zinkenarme 2 mit den Zinken 9 sind also so wahlweise spiegelbildlich zu der Radialen 15 am Kreiselrad 3 zu haltern, daß bei beiden möglichen Drehrichtungen R1, R2 des Kreiselrades 3 gleiche Verhältnisse vorliegen, nur die Seite, auf die das Halm- oder Blattgut abgelegt wird, wechselt.
Dadurch, daß auch alle Bauteile zur Zinkensteuerung symmetrisch zu der Radialen 15 angeordnet sind und die Kurvenbahn 22 symmetrisch ist, sind auch beim Drehrichtungswechsel analoge Verhältnisse, die Bewegung der Zinken 9 betreffend, gegeben.
Durch die Erfindung wurde ein Kreiselrechen für eine Heuwerbungsmaschine, beispielsweise eine Schwadmaschine geschaffen, durch den wahlweise ohne Verluste bei der Arbeitsqualität Halm- bzw. Blattgut nach links oder nach rechts geschwadet werden kann. Der Kreiselrechen kann in Heuwerbungsmaschinen mit nur einem Kreiselrechen oder auch mit weiteren Kreiselrechen zum Einsatz kommen und ermöglicht vielseitige technologische Einsatzmöglichkeiten dieser Maschinen.

## Patentansprüche

1. Kreiselrechen für eine Heuwerbungsmaschine, insbesondere eine Schwadmaschine, mit einem um eine aufrechte Achse (4) drehbaren Kreiselrad (3), dessen Antrieb über ein Zwischengetriebe von der Zapfwelle eines Zugfahrzeugs aus erfolgt und das sich im Betrieb über Stützräder (1) zum Erdboden hin abstützt, wobei mit Federspeichern ausgebildete Zinken (9) an etwa horizontal und annähernd tangential zum Kreiselrad (3) ausgerichteten Zinkenarmen (2) gehaltert sind, die wiederum in ebenfalls tangential in Längsrichtung zum Kreiselrad (3) ausgerichteten Traglagern (12, 13) aufgenommen werden und die Zinkenarme (2) zur Erzeugung von Arbeitsbewegungen um Längsachsen (14) der Traglager (12, 13) an einer begrenzt um die Achse (4) verschwenkbaren Kurvenbahn (22) geführt sind, dadurch gekennzeichnet, daß das Kreiselrad (3) in an sich bekannter Weise in seiner Drehrichtung (R1, R2) umkehrbar ist und die Zinkenarme (2) nach Vorwahl einer der beiden möglichen Drehrichtungen (R1, R2) des Kreiselrades (3) endseitig immer derart mit Traglagern (12, 13) lösbar zu verbinden sind, daß sie rechtwinklig und spiegelsymmetrisch zu einer Radialen (15) des Kreiselrades (3) ausgerichtet sind und Federspeicher der Zinken (9) nur in Rollrichtung ihrer Windungen bei der Arbeit belastet werden.

2. Kreiselrechen nach Anspruch 1, dadurch gekennzeichnet, daß den Zinkenarmen (2) im Bereich ihrer fest am Kreiselrad (3) befindlichen Traglager (12, 13) bei ihrer Drehbewegung um die vertikale Achse (4) ein Drehmoment zur Erreichung ihrer Arbeits- bzw. Schwenkbewegung um die Längsachsen (14) der Traglager (12, 13) erteilt wird.

3. Kreiselrechen nach Anspruch 1 und 2, dadurch gekennzeichnet, daß die Längsachsen der Zinkenarme (2) koaxial zur Längsachse (14) der Traglager (12, 13) liegen.

4. Kreiselrechen nach Anspruch 1 bis 3, dadurch gekennzeichnet, daß den Traglagern (12, 13) als Innenteil Schwenkrohre (13) zur Aufnahme der Zinkenarme (2) am Kreiselrad (3) zugeordnet sind, die um annähernd tangentiale Längsachsen (14) verschwenkbar in Stehlagern (12) vom Traglager (12, 13) gelagert sind, wobei die Schwenkbewegungen der Schwenkrohre (13) von der jeweiligen Stellung zur Kurvenbahn (22) bestimmt werden und die Schwenkrohre (13) und damit die Traglager (12, 13) symmetrisch zu Radialen (15), welche rechtwinklig zu den Längsachsen (14) durch die Achse (4) verlaufen, angeordnet sind.

5. Kreiselrechen nach den Ansprüchen 1 bis 4, dadurch gekennzeichnet, daß die Zinkenarme (2) mit den Traglagern (12, 13) insbesondere mit den Schwenkrohren (13) in Form einer lösbaren Verbindung (5) so gehaltert sind, daß die Bewegungen der Schwenkrohre (13) auf die Zinkenarme (2) übertragen werden.

6. Kreiselrechen nach den Ansprüche 1 bis 5, dadurch gekennzeichnet, daß die Zinkenarme (2) mit den Traglagern (12, 13) in einem solchen radialen Abstand zur Achse (4) gelagert sind, daß der horizontale Winkel α zwischen einer die Zinkenspitzen (6, 7) verbindenden Geraden (8) und einer die Achse (4) und die äußerste Zinkenspitze (6) schneidenden Geraden (10) 10 bis 30 Grad, vorzugsweise 20 Grad, beträgt, wenn sich die Zinken (9) in ihrer Rechposition befinden.

7. Kreiselrechen nach den Ansprüchen 1 bis 6, dadurch gekennzeichnet, daß symmetrisch zu den Radialen (15) Hebel (16) an den Schwenkrohren (13) der Traglager (12, 13) jeweils eine Steuerstange (17) und ein Zapfen (19) vorgesehen sind, wobei die Steuerstange (17) und der Zapfen (19) Verbindungsglieder zwischen den Hebeln (16) und zugehörigen Rollen (20) in der Kurvenbahn (22) sind.

8. Kreiselrechen nach den Ansprüchen 1 bis 7, dadurch gekennzeichnet, daß die Kurvenbahn (22) durch ein nach oben offenes, horizontal um die Achse (4) angeordnetes U-Profil gebildet wird.

9. Kreiselrechen nach den Ansprüchen 1 bis 8, dadurch gekennzeichnet, daß die Zapfen (19) mit den Rollen (20) von oben in die Kurvenbahn (22) eingreifen und eine radial bewegliche Antriebsverbindung zwischen dem oberen Ende der Zapfen (19) oder den Steuerstangen (17) und dem Kreiselrad (3) besteht.

10. Kreiselrechen nach den Ansprüchen 1 bis 9, gekennzeichnet durch Rollen (21) auf den oberen Enden der Zapfen (19), die in jeweils symmetrisch zu den Radialen (15) am Kreiselrad (3) gehalterten Führungsbahnen (23) nur radial beweglich sind.

11. Kreiselrechen nach den Ansprüchen 1 bis 10, dadurch gekennzeichnet, daß die Führungsbahnen (23) durch ein nach unten offenes C-Profil gebildet werden.

12. Kreiselrechen nach den Ansprüchen 1 bis 10, dadurch gekennzeichnet, daß die Steuerstangen (17) an den jeweils zugehörigen Zapfen (19) zwischen der Rolle (20) in der Kurvenbahn (22) und der Rolle (21) in der Führungsbahn (23) und andererseits an den Hebeln (16) der Schwenkrohre (13) gelagert sind.

13. Kreiselrechen nach zumindest einem der Ansprüche 1 bis 12, dadurch gekennzeichnet, daß die Zinkenarme (2) zweiteilig ausgeführt sind, wobei jeweils ein Zwischenstück (29) endseitig lösbar im Schwenkrohr (13) des Traglagers (12, 13) zu haltern ist und an dem dann noch freien Ende des Zwischenstücks (29) ein Zinkenhalteteil (30) lösbar jeweils so zu befestigen ist, daß die Zinkenspitzen (6, 7) den Längsachsen (14) der Zinkenarme (2) nacheilen und Federspeicher der Zinken (9) nur in Rollrichtung ihrer Windungen belastet werden.

## Claims

1. A rotary rake for a hay making machine, particularly a windrower, with a rotary wheel (3) rotatable about a vertical axis (4) and which is driven by the power take-off shaft of a tractor vehicle through an intermediate gear mechanism and which, while in operation, is braced on the ground via support wheels (1), whereby tines (9) constructed with spring storage means are supported on tine arms (2) directed substantially horizontally and approximately tangentially in relation to the rotary wheel (3) and which are in turn accommodated in supporting bearings (12, 13) aligned likewise tangentially in the longitudinal direction in relation to the rotary wheel (3), the tine arms (2) being guided on a curved path (22) adapted for limited pivoting about the axis (4) in order to produce working movements about longitudinal axes (14) of the supporting bearings (12, 13), characterised in that, in per se known manner, the rotary wheel (3) is reversible in its direction of rotation (R1, R2) and the tine arms (2), after pre-selection of one of the two possible directions (R1, R2) of the rotary wheel (3) are to be separably connected at their ends to the support bearings (12, 13) always in such a way that they are orientated at right-angles to and in mirrored symmetrical relationship to a radial line (15) of the rotary wheel (3) and spring storage means of the tines (9) are loaded only in the rolling direction of their turns while working.

2. A rotary rake according to claim 1, characterised in that in order to attain their working or pivoting movement about the longitudinal axes (14) of the support bearings (12, 13) a torque is imparted to the tine arms (2) in the region of their support bearings (12, 13) which are rigid on the rotary wheel (3).

3. A rotary rake according to claims 1 and 2, characterised in that the longitudinal axes of the tine arms (2) are coaxial with the longitudinal axis (14) of the support bearings (12, 13).

4. A rotary rake according to claims 1 to 3, characterised in that pivot tubes (13) for holding the tine arms (2) on the rotary wheel (3) as an internal part are associated with the support bearings (12, 13) and are mounted in pedestal bearings (12) of the support bearing (12, 13) to be pivotable about approximately tangential longitudinal axes (14), the pivoting movements of the pivot tubes (13) being determined by the particular position in relation to the curved path (22) and the pivot tubes (13) and thus the support bearings (12, 13) being disposed symmetrically in relation to radial lines (15) extending through the axis (4) at right-angles to the longitudinal axes (14).

5. A rotary rake according to claims 1 to 4, characterised in that the tine arms (2) with the support bearings (12, 13), particularly with the pivot tubes (13), are so supported in the form of a separable connection (5) that the movements of the pivot tubes (13) are transmitted to the tine arms (2).

6. A rotary take according to claims 1 to 5, characterised in that the tine arms (2) with the support bearings (12, 13) are mounted at such a radial distance from the axis (4) that the horizontal angle α between a straight line (8) connecting the tine points (6, 7) and a straight line (10) intersecting the axis (4) and the outermost tine point (6) amounts to 10 to 30 degrees and preferably 20 degrees when the tines 9 are in their raking position.

7. A rotary rake according to claims 1 to 6, characterised in that symmetrically in relation to the radial lines (15), a control rod (17) and a journal (19) are in each case provided symmetrically in relation to the radial lines (15) of levers (16) on the pivot tubes (13) of the support bearings (12, 13), the control rod (17) and the journal (19) being connecting links between the levers (16) and associated rollers (20) in the curved path (22).

8. A rotary rake according to claims 1 to 7, characterised in that the curved path (22) is constituted by an upwardly open horizontal U-shaped section disposed around the axis (4).

9. A rotary rake according to claims 1 to 8, characterised in that the journals (19) have rollers (20) engaging the curved path (22) from above and in that there is a radially movable driving connection between the top end of the journals (19) or the control rods (17) and the rotary wheel (3).

10. A rotary take according to claims 1 to 9, characterised by rollers (21) on the upper ends of the journals (19) which are adapted for movement only radially in guide paths (23) respectively supported symmetrically in relation to the radial lines (15) on the rotary wheel (3).

11. A rotary rake according to claims 1 to 10, characterised in that the guide paths (23) are formed by a downwardly open C-shaped section.

12. A rotary rake according to claims 1 to 10, characterised in that the control rods (17) on the respectively associated journals (19) are mounted between the roller (20) and the curved path (22) and the roller (21) in the guide path (23) while at the other end they are mounted on the levers (16) of the pivot tubes (13).

13. A rotary rake according to at least one of claims 1 to 12, characterised in that the tine arms (2) are constructed on two parts, in each case one intermediate piece (29) requiring to have its end separately supported in the pivot tube (13) of the support bearing (12, 13) and in that a tine holding part (30) must in each case be so separably fixed on the still free end of the intermediate piece (29) that the tine points (6, 7) trail behind a longitudinal axes (14) of the tine arms (2) and spring storage means of the tines (9) are biased only in the rolling direction of their turns.

## Revendications

1. Râteau rotatif pour une machine de fenaison, notamment une andaineuse, comprenant un rotor (3) tournant autour d'un axe montant (4) dont l'entraînement est assuré par une transmission à partir de la prise de force d'un tracteur et qui, pendant le fonctionnement, s'appuie sur le sol par des roues d'appui (1), des bras (2) sensiblement horizontaux et dirigés pratiquement tangentiellement au rotor (3) partant des dents (9) en forme d'accumulateur de force, ces bras étant eux-mêmes reçus dans des paliers de support (12, 13) de direction longitudinale également tangente au rotor (3), et les bras (2) des dents étant guidés par un chemin de came (22) pour basculer de manière limitée autour de l'axe (4) et créer des mouvements de travail autour de l'axe longitudinal (14) du palier de support (12, 13),
caractérisé en ce que
le rotor (3) présente, de manière connue, un sens de rotation (R1, R2) réversible et après présélection de l'un des deux sens de rotation (R1, R2) possibles du rotor (3), les bras (2) sont reliés de manière amovible, du côté de l'extrémité, aux paliers de support (12, 13) pour être toujours alignés à l'équerre et de manière symétrique plane par rapport à un rayon (15) du rotor (3), et les accumulateurs à ressort des dents (9) ne sont chargés pendant le travail que dans le sens de l'enroulement de leurs spires.

2. Râteau rotatif selon la revendication 1,
caractérisé en ce que
au niveau de leur palier de support (12, 13) solidaire du rotor (3), les bras à dents (2) reçoivent par leur mouvement de rotation autour de l'axe vertical (4), un couple pour passer en position de travail ou de pivotement autour de l'axe longitudinal (14) des paliers de support (12, 13).

3. Râteau rotatif selon la revendication 1 et 2,
caractérisé en ce que
l'axe longitudinal des bras à dents (2) est coaxial à l'axe longitudinal (14) des paliers de support (12, 13).

4. Râteau rotatif selon les revendications 1 à 3,
caractérisé en ce que
les paliers de support (12, 13) comportent comme pièces intérieures, des tubes pivotants (13) pour recevoir les bras à dents (2) sur le rotor (3), bras qui sont montés pivotants dans des paliers fixes (12) des paliers de support (12, 13), autour d'axes longitudinaux (14) pratiquement tangents, et les mouvements de pivotement des tubes pivotants (13) sont définis par la position respective par rapport au chemin de came (22), et les tubes pivotants (13), et ainsi les paliers de support (12, 13), sont symétriques par rapport aux rayons (15) perpendiculaires aux axes longitudinaux (14) passant par l'axe (4).

5. Râteau rotatif selon l'une des revendications 1 à 4,
caractérisé en ce que
les bras à dents (2) sont portés par les paliers de support (12, 13), notamment avec les tubes pivotants (13), sous la forme d'une liaison amovible (5), pour transmettre aux bras à dents (2) les mouvements de pivotement des tubes pivotants (13).

6. Râteau rotatif selon les revendications 1 à 5,
caractérisé en ce que
les bras à dents (2) et les paliers de support (12, 13) sont montés à une distance radiale par rapport à l'axe (4) telle que l'angle horizontal (α) compris entre une droite (8) passant par les pointes de dents (6, 7) et une droite (10) coupant l'axe (4) et la pointe de dent extérieure (6), soit compris entre 10 et 30° et égal de préférence à 20° lorsque les dents (9) occupent leur position de ratissage.

7. Râteau rotatif selon l'une des revendications 1 à 6,
caractérisé en ce que
symétriquement au rayon (15), les tubes pivotants (13) des paliers de support (12, 13) portent sur leur levier (16) une tige de commande (17) et un ergot (19), la tige de commande (17) et l'ergot (19) constituant des organes de liaison entre les leviers (16) et les galets correspondants (20) logés dans le chemin de came (22).

8. Râteau rotatif selon les revendications 1 à 7,
caractérisé en ce que
le chemin de came (22) est formé par un profité à section en U, ouvert vers le haut, disposé horizontalement autour de l'axe (4).

9. Râteau rotatif selon l'une des revendications 1 à 8,
caractérisé en ce que
les ergots (19) et les galets (20) pénètrent par le dessus dans le chemin de came (22) et une liaison d'entraînement mobile radialement relie l'extrémité supérieure des ergots (19), ou les tiges de commande (17), et le rotor (3).

10. Râteau rotatif selon les revendications 1 à 9,
caractérisé par
des galets (21) prévus à l'extrémité supérieure des ergots (19), qui ne sont mobiles que radialement dans des chemins de guidage (23), sont maintenus, chaque fois symétriquement par rapport au rayon (15), sur le rotor (3).

11. Râteau rotatif selon les revendications 1 à 10,
caractérisé en ce que
les chemins de guidage (23) sont formés par un profité en C ouvert vers le bas.

12. Râteau rotatif selon les revendications 1 à 10,
caractérisé en ce que
les tiges de commande (17) sont montées sur les ergots (19) correspondants entre le galet (20) logé dans le chemin de came (22) et le galet (21) logé dans le chemin de guidage (23), et par ailleurs sur les leviers (16) des tubes pivotants (13).

13. Râteau rotatif selon au moins l'une des revendications 1 à 12,
caractérisé en ce que
les bras à dents (2) sont en deux parties, et respectivement une pièce intermédiaire (29) est tenue par l'extrémité, de manière amovible, dans le tube pivotant (13) du palier de support (12, 13), et l'extrémité encore libre de la pièce intermédiaire (29) porte de manière amovible une pièce de fixation de dents (30), les pointes de dents (6, 7) se trouvant en aval des axes longitudinaux (14) des bras à dents (2) et les accumulateurs à ressort des dents (9) ne sont chargés que dans le sens de l'enroulement de leurs spires.
